# EUROPEAN PATENT APPLICATION

(11) **EP 1 911 518 A1**
(43) Date of publication of application: **16.04.2008**
(21) Application number: 06782325.2
(22) Date of filing: 04.08.2006
(51) Int. Cl.: B01J 45/00, B01J 20/26, C08L 39/00, C08L 101/12, D01F 6/94, D06M 15/61

(54) **MATERIAL FOR TRANSFER OF SUBSTANCE IN LIQUID COMPRISING POLYMER BLEND**

(30) Priority: 05.08.2005 JP 2005228331
(71) Applicant: Shiga Prefecture, Otsu-shi, Shiga 520-8577 (JP); OSAKA UNIVERSITY, Suita-shi, Osaka 565-0871 (JP); Japan Science and Technology Agency, Kawaguchi-shi, Saitama 332-0012 (JP); Shiga Prefecture Industrial Support Center, Otsu-shi, Shida 5200806 (JP)
(72) Inventor: AOSHIMA, Sadahito, Suita-shi, Osaka 565-0871 (JP); KANAOKA, Shokyoku, Suita-shi, Osaka 565-0871 (JP); NAKAJIMA, Keiji, Ritto-shi, Shiga 520-3004 (JP); UESAKA, Takahiro, Hikone-shi, Shiga 522-0057 (JP)
(74) Representative: Jönsson, Hans-Peter
(86) International application number: PCT/JP2006/315467
(87) International publication number: WO 2007/018138

(57) **Abstract**

There is provided in the present invention a material for transfer of a substance in a liquid, which can trap/remove an objective substance contained in drainage water, waste water or a liquid at a limited area, and also can readily retrieve the polymer after trapping the objective substance from the liquid. The present invention relates to the material for transfer of a substance in a liquid containing a polymer blend comprising an amine-based polymer and a hydrophilic polymer.

## Description

### Technical Field

The present invention claims priority under the Paris convention based on Japanese Patent Application No. 2005-228331 (application date: August 5, 2005, title of the invention: Material for Transfer of Substance in Liquid Comprising Polymer Blend), and the entire content of which is herein incorporated by reference.

The present invention relates to a material for transfer of a substance in a liquid comprising a polymer blend containing an amine-based polymer and a hydrophilic polymer. Specifically, the present invention relates to a material for transfer of a substance in a liquid that is able to trap/remove an objective substance contained in drainage water, waste water or in a liquid at a limited area.

### Background Art

Amine-based polymers are cationic polymers quite soluble in water by being positively charged in water. In particular, since an amine-containing linear olefin-based polymer has a unique reactive polymer structure and property, it is used in quite many fields as a dye adhesive agent for reactive dyes, a dye adhesive agent for direct dyes, a paper processing agent and a processing agent (water resistant agent) for ink-jet printer paper. The olefin-based polymer is also used as an aldehyde adsorbing agent (see, for example, patent documents 1 and 2).

On the other hand, the amine compound is known to readily react with metals in water and form complex compounds (see, for example non-patent document 1).

Environmental standards have been provided for harmful substance contained in drainage water, waste water and in liquids at a limited area, for example, chromium, selenium, arsenic and mercury, based on the Basic Law for Environmental Pollution Control, and treatment methods for maintaining the level of the harmful substance below a level prescribed in the law have been studied. Methods for separation/retrieval of useful substance, for example rare metals such as gold, platinum, palladium and ruthenium, in drainage water and waste water have been also studied in terms of effective utilization of resources.

Examples of the method of separation/retrieval of metals and metal ions contained in water include an adsorption method using ion-exchange resins and chelate resins having functional groups capable of electively bonding the metal ions (see, for example, patent documents 3 to 5) and a coagulation/precipitation treatment method for allowing the objective substance to be precipitated by adding a coagulation agent in the liquid of interest (see, for example, patent documents 6 and 7).

Patent document 8 discloses a composite of a positively charged polymer and a negatively charged micelle and a method for recovering substances from waste water using the composite. The micelle is composed of at least one kind each of anionic surfactants and nonionic surfactants. Amine-based compounds are also disclosed as surfactants contained in the micelle. However, while composites of polymers and "micelles" and composites of these composites and silicon-containing compounds have been disclosed in the reference, no polymer blends composed of the amine-based polymers and other hydrophilic polymers and substance recovery techniques using the polymer blend have been proposed.

Patent document 9 discloses cationic water-soluble copolymers having amino groups and methods for cleaning waste water using the copolymer as coagulation/precipitation agents. However, the document proposes neither polymer blends comprising the amine-based polymers and other hydrophilic polymers nor substance recovery techniques from waste water using the polymer blend.

Patent document 10 discloses compositions containing, for example, solid supports having a spherical shape and polyamide-containing ligands such as polyamide polymers covalently bonded to the support, and methods for retrieving metals from a liquid using the composition. However, the polyamide-containing ligand contained in the composition is a chelating material as an adsorption agent and forms a complex with the metal. Accordingly, the polyamide is a cyclic compound as a chelating compound and is not a generally defined polymer. Therefore, the document proposes neither polymer blends comprising the amine-based polymer and other hydrophilic polymers nor substance recovery techniques from waste water using the composition.

An anion-exchange fiber capable of being used for removal/recovery of metals from drainage water, which is composed of polyvinyl alcohol and a hydrophilic polymer having functional groups, has been proposed by Nitivy Co. (http://www.nitivy.co.jp/). However, since the material used is different from an amine-based polymer having amine groups as repeating units, it is not sufficient as a material for recovering substances, although the material used involves primarily to tertiary amino groups as ion-exchange groups.

Patent document 11 discloses a catalyst using polyvinyl alcohol as a frame in which precious metals are supported on anion-exchange fiber having primary to tertiary amines and quaternary ammonium as functional groups. An example of the method for introducing the ion-exchange group into the fiber is to knead a compound such as polyethylene imine into the fiber. However, the document does not propose any techniques for recovering substances from waste water using a polymer blend composed of the amine-based polymer and other hydrophilic polymers.

Patent document 12 discloses water-soluble polyvinyl alcohol-based colored threads composed of a polymer dye obtained by allowing a polyvinyl alcohol-based polymer, a water-soluble polymer and a reactive dye to react, and a specific example of the water-soluble dye is a polyallylamine. However the document does not propose any substance recovery technique from waste water using a polymer blend comprising an amine-based polymer and other hydrophilic polymers.

In the case of separation/recovery of metals and metal ions in the liquid in a laboratory scale, using the above-mentioned ion-exchange resin and chelate resin as adsorbing materials is effective for trapping metals. However, in the case of processing a large amount of waste water, besides the adsorbing material thereof itself is expensive, it is necessary to process the used metal-containing adsorption material, which results in requiring further vast quantity of cost for processing. In addition, the processing cost further increases since the coagulate containing precipitated metals is required to be treated in a controlled disposal field or to be treated as a special management industrial waste.

Patent Document 1: Japanese Patent Application Laid-Open No. (JP-A) 06-007418

Patent Document 2: JP-A 2001-276609

Patent Document 3: JP-A 2005-154973

Patent Document 4: JP-A 2000-342962

Patent Document 5: JP-A 7-328434

Patent Document 6: JP-A 2002-126758

Patent Document 7: JP-A 2004-298720

Patent Document 8: USP No. 6,524,485

Patent Document 9: JP-A 2002-145956

Patent Document 10: Japanese Patent Application National Publication (laid-Open) No. 2003-510461

Patent Document 11: JP-A 6-170236

Patent Document 12: JP-A 5-247720

Non-Patent Document 1: Die Makromolekulare Chemie, Rapid Communications, vol. 7, p. 339 to 343, 1986

### Disclosure of the Invention

### Problems to be Solved by the Invention

While it is possible to form a complex with an objective substance contained in drainage water, waste water or a liquid at a limited area by using conventional amine-based polymers and amine compounds, it was difficult to retrieve the objective substance from the liquid.

Accordingly, the object of the present invention is to provide a material for transfer of substances in a liquid, which can trap/remove the objective substance contained in drainage water, waste water or the liquid at a limited area, and also can readily retrieve the polymer after trapping the objective substance from the liquid.

### Means for Solving the Problem

The present invention relates to a material for transfer of substances in a liquid, comprising a polymer blend containing an amine-based polymer and a hydrophilic polymer.

The material for transfer of the substance in the liquid according to the present invention preferably has a structure in which the amine-based polymer is highly dispersed in a matrix of the hydrophilic polymer. Such structure facilitates trap/removal of the objective substance by forming a complex between the material for transfer of the substance in the liquid and the objective substance within the material. In other words, the objective substance in the liquid is trapped in the material for transfer of the substance in the liquid by allowing the material for transfer of the substance in the liquid to contact a processing liquid that contains the objective substance to be retrieved, and the objective substance is removed from the liquid by retrieving the material for transfer of the substance in the liquid.

The material for transfer of the substance in the liquid in which the objective substance is trapped is made contact a collected liquid such as an acidic aqueous solution, and a condition is set depending on stimulus responsiveness of the objective substance and the material for transfer of the substance in the liquid. Consequently, the objective substance is released from the inside of the material for transfer of the substance in the liquid, and the objective substance may be recovered/concentrated in the collected liquid.

It is also possible to repeat trap and release of the same or different substance using the material for transfer of the substance in the liquid according to the present invention.

The term "a material for transfer of substances in a liquid" as used in the present invention includes a material for trapping an objective substance in a polymer blend of the present invention, or for releasing the objective substance from the polymer blend that has already trapped the objective substance. Likewise, the term "a method for transfer of substances in a liquid" includes a method for trapping an objective substance in a polymer blend of the present invention, or for releasing the objective substance from the polymer blend that has already trapped the objective substance.

The term "stimulus responsiveness" as used in the present invention refers to changes of physical or chemical states in response to at least one stimulus selected from temperature change, exposure to light or electromagnetic wave, pH change, concentration change, addition of organic solvents and the like.

### Best Mode for Carrying Out the Invention

The material for transfer of substances in a liquid according to the present invention contains a polymer blend comprising an amine-based polymer and a hydrophilic polymer.

The amine-based polymer of the present invention refers to a polymer which has nitrogen atoms on the main chain and/or side chain of the polymer. The amine-based polymer available in the present invention is not particularly restricted so long as the polymer is able to form a blend with the hydrophilic polymer, and is able to be dispersed or dissolved in a matrix of the hydrophilic polymer, and includes arbitrary amine-based polymers known in the art.

The amine-based polymer is preferably a polymer having at least one amine residue selected from the group consisting of primary to tertiary amines in the repeating unit. The polymer includes not only the polymer having at least one amine residue selected from the group consisting of primary to tertiary amines in one repeating unit, but also a polymer formed by random, graft or block copolymerization of at least one repeating units as described above. While the polymer is not particularly restricted, typical examples thereof include polyamines (primary), polyalkyleneamines (primary), polydiallylamines (secondary), polyaniline (secondary to tertiary), polyacrylamide (secondary), polyamides (secondary), polypyridine (primary), polyvinylpyridine (tertiary), polyimide (secondary to tertiary), polyurethane (secondary), polyamino acids (secondary) and polynucleotides (primary to secondary), or salts thereof, or copolymers thereof.

In a more preferable embodiment of the present invention, the amine-based polymer is a polymer having at least one amine residue selected from the group consisting of primary to secondary amines in the repeating unit.

Particularly, it is preferable that the amine-based polymer is a polymer having the primary amines in the repeating unit, since the polymer is highly reactive with metals and metal ions, and with metal compounds and metal compound ions when used as the material for transfer of substances in the liquid, and readily forms a complex with the metal, metal ions, metal compounds or metal compound ions.

Favorably, the polymer having the primary amine in the repeating unit has a repeating unit represented by formula (I):

-(CHR¹-CH(R²-NH₂))- (I)

(in the formula, R¹ represents a hydrogen atom, a hydroxyl group or an alkyl group having 1 to 5 carbon atoms, and R² represents CₙH₂ₙ (n represents an integer from 0 to 5)).

More preferably, the polymer having the primary amine in the repeating unit has a repeating unit represented by formula (I):

-(CHR¹-CH(R²-NH₂))- (I)

(in the formula, R¹ represents a hydrogen and R² represents CₙH₂ₙ (n represents an integer of 0 or 1)).

The amine-based polymer suitable for use in the present invention preferably has a weight average molecular weight from 500 or more, more preferably 1000 or more, and preferably 1,000,000 or less, more preferably 500,000 or less.

The content of the amine-based polymer is from 0.1 to 50% by weight based on the amount of the polymer blend in a preferable embodiment of the present invention. The content of the amine-based polymer is preferably 0.1% by weight or more, more preferably 0.5% by weight or more and further preferably 1% by weight or more based on the amount of the polymer blend in terms of improvement of substance trapping ability per unit weight. The content of the amine-based polymer is preferably 50% by weight or less, more preferably 40% by weight or less, and further preferably 35% by weight or less based on the amount of the polymer blend in terms of shape stability in water and repeated trapping performance.

Such amine-based polymer may be a copolymer. It is advantageous to select copolymerization components and proportion of copolymerization for controlling reactivity of the copolymer with the objective substance such as a metal and for readily acquiring affinity with the hydrophilic polymer and solvent.

Examples of the appropriate copolymerization component include maleic acid, acrylamide, monomers having -SO₂ on the main chain and monomers having sulfonic acid group on the side chain.

In the present invention, the hydrophilic polymer to be blended with the amine-based polymer includes any polymers that are different from the amine-based polymer used, are able to maintain the shape when in contact with water, and are able to enclose water in the polymer.

The hydrophilic polymer is preferably a polymer containing at least one group or bond selected from the group consisting of hydroxyl group, ether bond and amide bond.

Examples of the hydrophilic polymer include polyvinyl alcohol, polyallyl alcohol, polyvinylalkylene alcohol, polyacrylic acid, polymethacrylic acid, polyacrylamide, polyether, polyvinylalkyl ether, polyalkylene oxide such as polyethylene oxide and polypropylene oxide, hydroxyethyl polymethacrylate, poly-n-hydroxyvinyl alcohol, poly-n-hydroxy acrylic acid, polyvinyl pyrrolidone, polyvinyl acetate and polyvinyl acetal.

Examples of other hydrophilic polymers available include natural hydrophilic polymers including cellulose and cellulose derivatives such as methyl cellulose, acetyl cellulose, hydroxymethyl cellulose, hydroxypropyl cellulose, hydroxyethylmethyl cellulose, carboxymethyl cellulose and diethylaminoethyl cellulose, and polysaccharides such as alkyl starch, hydroxylalkyl starch, hydroxyalkylalkyl starch, starch ester, agar, alginic acid and carrageenan.

It is preferable to use at least one polymer selected from the group consisting of polyvinyl alcohol, polyvinylalkylene alcohol (especially those having 1 to 5 carbon atoms in the alkylene group), polyether, polyvinylalkylether (especially those having 1 to 5 carbon atoms in the alkyl group), polyacrylic acid (or may be polymethacrylic acid), polyacrylamide, polyalkylene oxide, polyamide, polyamino acids, polysaccharide (for example cellulose) and polynucleotide as the hydrophilic polymer in the present invention in terms of stability in the liquid, affinity with water and processability of the polymer.

It is particularly preferable that the hydrophilic polymer contains polyvinyl alcohol or cellulose in terms of stability in the liquid, affinity with water and processability of the polymer as well as compatibility with the amine-based polymer.

The hydrophilic polymer suitable in the present invention preferably has a weight average molecular weight of 5,000 or more, more preferably 10,000 or more and further preferably 50,000 or more; and preferably 10,000,000 or less, more preferably 5,000,000 or less, further preferably 2,000,000 or less, and particularly preferably 1,000,000 or less.

The hydrophilic polymer may be a copolymer, which is advantageous in that hydrophilicity of the polymer may be controlled while the polymer may readily acquire affinity with various solvents by selecting copolymerization components and a copolymerization ratio.

Examples of the appropriate copolymer component include olefin-based monomers, monomers containing esters in the side chain, monomers containing carboxylic acids in the side chain and monomers containing chlorine in the side chain, and ethylene, vinyl acetate, acrylic acid ester, acrylic acid and vinyl chloride are particularly preferable. A copolymerization component capable of introducing ester bonds into the main chain after copolymerization, particularly lactic acid, may be used.

The hydrophilic polymer may be a cross-linked polymer, which is advantageous in that, for example, mechanical characteristics of the polymer may be remarkably improved while hydrophilicity may be controlled by changing the cross-linking density. Cross-linking agents usually used for the hydrophilic polymer may be added, auto-cross-linking reaction may be facilitated by stimulus of temperature change or addition of a solvent, or a radiation may be irradiated for forming the cross-linked polymer.

The amine-based polymer and hydrophilic polymer are blended in the present invention so as to form a structure in which the amine-based polymer is dispersed or dissolved in the matrix preferably containing the hydrophilic polymer. While the method for allowing the amine-based polymer to be dispersed or dissolved in the matrix containing the hydrophilic polymer is not particularly restricted, the methods available include a melt-blending method and a solution blending method using an aqueous and/or organic solvent. The amine-based polymer may be linked to the hydrophilic polymer in the polymer blend of the present invention.

The melt-blend method as used herein refers to a method by which a blend is obtained by mechanically kneading plural polymers capable of melting or softening in a given temperature range in a molten state. The solution blending method refers to a method by which a blend is obtained by dissolving (including both solubilized sate and emulsified state) plural polymers in one or plural solvents (mixed solvent), or by mechanically dispersing the polymers in the solvent (mixed solvent).

While it is most preferable that the amine-based polymer is present as one molecular chain state as the dispersed or dissolved structure, it may be advantageous that the polymer is present in a size with a maximum diameter of preferably 100 µm or less, more preferably 10 µm or less and further preferably 100 nm or less.

The blending method may be appropriately selected depending on the properties of the amine-based polymer and hydrophilic polymer used. The melt-blending method may be employed, for example, when both polymers form a molten polymer in the same temperature range, while the solution blend method may be employed when both polymers are dispersed or dissolved in the same solvent. The blending method is available when each polymer is dispersed or dissolved in respective different solvents so long as these solvents are compatible to one another. When one polymer forms a molten polymer while the other polymer is dispersed or dissolved in a solvent in the same temperature range, the blend can be also obtained by mixing the molten polymer and dispersed or dissolved polymer. A uniform blend can be obtained by adding an appropriate compatibilizer when respective polymers exhibit phase separation by blending. Shape stability of the blend in liquid may be improved by applying a heat treatment, chemical modification or irradiation of radiation to the blend obtained by the blending method.

Water or ethanol, acetone, chloroform, dimethylsulfoxide or other organic solvents, alone or as a mixture thereof, may be used as the solvent when the solution blending method is employed. The solvent (mixed solvent) may be used at high temperatures.

The polymer blend containing the amine-based polymer and hydrophilic polymer obtained as described above is used for transfer of objective substances, particularly for trapping from the liquid including objective substances and released into a liquid. When the polymer blend is used for the material for transfer of substances in the liquid, the polymer blend is preferably formed into the shape of granules, fibers, films, gels or sheets depending on the properties of the objective substance or processed liquid.

Accordingly, the present invention relates to a material for transfer of substances in the liquid having the shape of granules, fibers, films, gels or sheets. In a particularly preferable embodiment, the material for transfer of substances in the liquid has a fibrous shape having a tensile modulus from 50 MPa to 150 GPa. The tensile modulus is preferably 50 MPa or more, more preferably 100 MPa or more and further preferably 200 MPa or more in terms of the strength of the fiber. In addition, the tensile modulus is preferably 150 GPa or less, more preferably 100 GPa or less and further preferably 50 GPa or less in terms of processability and flexibility.

When the material for transfer of substances in the liquid assumes a fibrous shape, the fiber preferably has a BET specific surface area from 0.001 to 800 m²/g and a thickness from 0.1 µm to 5 mm in terms of water absorbing ability, swellability and substance-trapping ability per unit weight.

The material for transfer of substances in the liquid is preferably heat-treated after forming it into the shape of granules, fibers, films, gels or sheets in terms of trapping ability of the material for transfer of substances in the liquid, since hydrogen bonds are strengthened by removing water of crystalization between the hydrophilic polymer molecules to increase interaction with the amine-based polymer.

Accordingly, the present invention relates to a method for manufacturing the material for transfer of a substance in a liquid, comprising the step of applying a heat treatment after forming it into the shape of granules, fibers, films, gels or sheets. The heat treatment is preferably applied in a temperature range from 130 to 160°C. The heat treatment is preferably applied at a temperature of 130 °C or more, more preferably 135°C or more and further preferably 140°C or more. In addition, the heat treatment is preferably applied at a temperature of 160°C or less, more preferably 155°C or less and further preferably 150°C or less. While the heat treatment may be applied in air or in an inert gas atmosphere, it is preferably applied in the inert gas atmosphere such as nitrogen, helium and argon. The heat treatment is particularly effective when polyvinyl alcohol is used as the hydrophilic polymer.

The material for transfer of substances in the liquid may be configured by coating the polymer blend on at least a part of the support such as granules, fibers, films, gels and sheets. The fiber may be a woven cloth or a non-woven cloth. The support may be formed from a material selected from the group consisting of polyolefin (for example polypropylene), polyester (for example polyethylene terephthalate), nylon, cellulose and derivatives thereof, vinylon, rayon, acrylic resin, cotton, wool, hemp and silk. Coating methods available include a dip method, a spray method, and a two layer spinning method by which the polymer blend is coated in harmony with spinning of the support.

The thickness of the coated polymer blend is preferably in the range from 0.1 µm to 5 mm in a preferable embodiment of the present invention. While the thickness of the coated layer is preferably 0.1 µm or more, more preferably 0.5 µm or more in terms of trapping performance per unit area of the base material, the thickness may be 1 µm or more in one case, otherwise 3 µm or more or 5 µm or more in another case, depending on the kind of the support. The thickness of the coated layer is preferably 5 mm or less, more preferably 3 mm or less and further preferably 1 mm or less in terms of water absorbing ability and swellability.

When the material for transfer of substances in the liquid is configured by coating the polymer blend of the present invention on at least a part of the support, the support is preferably heat-treated after coating the polymer blend on at least a part of the support in terms of trapping performance of the material for transfer of substances in the liquid.

Accordingly, the present invention relates to a method for producing the material for transfer of substances in the liquid comprising the step of applying a heat treatment after coating the polymer blend containing the amine-based polymer and hydrophilic polymer on at least a part of the support. The heat treatment temperature is preferably in the range from 130 to 160°C. The heat treatment temperature is preferably 130°C or more, more preferably 135°C or more and further preferably 140°C or more. In addition, the heat treatment temperature is preferably 160°C or less, more preferably 155°C or less and further preferably 150°C or less. While a heat treatment may be applied in air or in an inert gas atmosphere, it is preferable to apply the heat treatment in the inert gas atmosphere such as nitrogen, helium and argon. The heat treatment is particularly effective when polyvinyl alcohol is used as the hydrophilic polymer.

The amine-based polymer is preferably highly dispersed in the matrix containing the hydrophilic polymer in the polymer blend of the present invention. Accordingly, the hydroxyl group, ether bind or amide bond is able to physically and/or chemically interact with the amino group in the amine-based polymer. Consequently, the objective substance trapped in the polymer blend may be simultaneously separated when the polymer blend is separated after allowing it to contact a treating liquid. Therefore, trapping of the objective substance may be facilitated.

Subsequently, the objective substance may be recovered/concentrated by allowing the objective substance to be released by immersing the polymer blend in, for example, an acidic aqueous solution. It is possible to continuously repeat trap and release using the polymer blend of the present invention.

Accordingly, the present invention relates to a method for transfer of substances in the liquid, comprising the steps of: allowing the material for transfer of substances in the liquid to contact a treating liquid (preferably allowing the material for transfer of substances in the liquid to be immersed in the treating liquid) containing the objective substance using the polymer blend of the present invention; separating the material for transfer of substances in the liquid from the treating liquid after a lapse of predetermined time; and trapping the objective substance in the material for transfer of substances in the liquid.

The present invention also relates to a method for transferring substances in the liquid comprising the steps of: allowing the objective substance to be trapped in the material for transfer of substances in the liquid using the polymer blend of the present invention; allowing the material for transfer of substances in the liquid to contact the liquid (preferably allowing the material for transfer of substances in the liquid to be immersed in the liquid); and allowing the objective substance to be released in the liquid.

The material for transfer of substances in the liquid of the present invention may be packed in a column, whereby the objective substance is trapped by allowing the treating liquid containing the objective substance to flow through the column.

The present invention also relates to a method for transfer of substances in the liquid characterized by repeating trap and release of the objective substance.

While examples of the desired material capable of being trapped or released using the material for transfer of substances in the liquid of the present invention include metals and metal ions, metal compounds and ions thereof (including metal complexes and complex ions), pigments and low molecular weight compounds such as endocrine disrupting chemicals, the objective substance is not restricted thereto.

Examples of metals and metal ions and metal compounds and ions thereof (including metal complexes and complex ions) include metals such as nickel, chromium, gold, platinum, silver, copper, vanadium, cobalt, lead, zinc, mercury and cadmium, metal ions thereof, and compounds of these metals and ions of the compounds.

Examples of the pigment suitable for applying the material for transfer of substances in the liquid of the present invention include synthetic pigments such as food pigments red No. 2, No. 40 and No. 160, food pigment yellow No. 4 and food pigment blue No. 1 as well as synthetic and natural pigments such as azo, quinone, triphenylmethane and flavonoid dyes.

Examples of the endocrine disrupting chemical suitable for applying the material for transfer of substances in the liquid of the present invention include dioxins, bisphenol A, polybiphenyl chloride (PBC), polybiphenyl bromide (PBB), hexachlorobenzene (HCB), pentachlorophenol (PCP), 2,4,5-dichloropehnoxy acetic acid, amitrole, atrazine, alachlor, hexachlorocyclohexane, ethyl parathion, carbaryl, chlordane, oxychlordan, 1,2-dibromo-3-chloropropane, DDT, DDE, DDD, aldrin, endrine, dieldrin, heptachloroepoxide, estrogen, malathion, nitrophene, toxaphene, tributyl tin, triphenyl tin, trifluralin, nonyl phenol, 4-octyl phenol, dietylhexyl phthalate, butylbenzyl phthalate, di-n-butyl phthalate, dixyclohexyl phthalate, diethyl phthalate, 2,4-dichlorophenol, 2-ethylhexyl adipate, benzophenone, 4-nitrotoluene, octachlorostyrene, andicarb, dipertmerine, pertmeline, vinclozolin, dipentyl phthalate, dihexyl phthalate, dipropyl phthalate, dimer and trimer of styrene, n-butylbenzene and azobenzene.

Examples of the solution containing the objective substance to be trapped, or examples of the collected liquid into which the objective substance is released include one of the solvent selected from water, organic acids, inorganic acids, alcohols, acetone, acetonitrile and alkaline solutions, and mixed solvents of a plurality of these solvents. The solution into which the objective substance is released is preferably selected depending on the affinity with (solubility of) the objective substance. For example, acidic aqueous solutions of hydrochloric acid, sulfuric acid or nitric acid are suitable when the objective substance is a metal or a metal ion, or a metal compound or an ion thereof, which are cationic. When the objective substance is a metal or a metal ion, or a metal compound or an ion thereof, or a low molecular weight compound such as a pigment, which are anionic, the appropriate solution is, for example, an aqueous alkaline solution such as aqueous sodium hydroxide solution and aqueous potassium hydroxide solution. When the objective substance is an endocrine disrupting chemical, for example, the suitable solvent is an alcohol or acetonitrile that has a high solubility to the substance.

Specific examples for trap and release of the objective substance will be described below.

When the material for transfer of substances in the liquid is immersed in the treating solution containing the objective substance, such conditions are desirably employed that the polymer blend is completely swelled since the objective substance may be trapped not only on the contact surface of the polymer blend but also within the polymer blend. The extent of immersion may be determined depending on hydrophilicity of the polymer as well as on the shape of the material. For example, polyvinyl alcohol fibers with a diameter of about 1 mm usually requires an immersion time of about 1 hour until the entire fiber including the inside of the fiber is swelled.

Separation methods used in the art such as separation by coagulation and precipitation of the polymer by adding a coagulating agent and centrifugation may be employed for separating the material for transfer of substances in the liquid after a lapse of predetermined time. Since the polymer blend of the present invention may be formed into various shapes such as granules, fibers, films, gels and sheets, the polymer blend (the material for transfer of substances in the liquid) trapping the objective substance may be readily separated from the treating liquid by retrieving the immersed polymer blend (the material for transfer of substances in the liquid) from the treating liquid.

The material for transfer of substances in the liquid of the present invention may be advantageously used as a base material of a drug delivery system.

It is preferable in this case that the objective substance is allowed to be trapped in advance in the amine-based polymer that is dispersed or dissolved in the material for transfer of substances in the liquid of the present invention, or the amine-based polymer in which the objective substance has been trapped in advance is blended with the hydrophilic polymer to form the material for transfer of substances in the liquid, and this material for transfer of substances in the liquid is used for the base material of the drug delivery system. The objective substance may be released at a site (for example a diseased part), where the objective substance is desired to be released, by giving a stimulus such as temperature changes to the site.

Examples of the objective substance that may be released by the drug delivery system include oligopeptides, peptides, proteins, prostaglandin, cholesterol lowering agent, gastric anti-secretion agent, gastric anti-acid agent, anti-allergic agent, anti-asthma agent, ACE inhibitor, diuretics, anti-neogenesis agent, anti-virus nucleoside agent, anti-fungal agent, anti-Parkinson's disease agent, anti-epilepsia agent, analgesic, non-steroidal antiinflammatory agent, antitussive agent, decongestive, anaesthetic, antibiotics and blood vessel agent.

Principal embodiments and preferable embodiments of the present invention are listed in the following.
[1] A material for transfer of a substance in a liquid, comprising a polymer blend containing an amine-based polymer and a hydrophilic polymer, wherein the amine-based polymer is a polymer having at least one selected from the group consisting of primary to tertiary amines in repeating units.
[2] The material for transfer of a substance in a liquid according to the above described [1], wherein the amine-based polymer is a polymer having at least one selected from the group comprising primary to secondary amines in the repeating units.
[3] The material for transfer of a substance in a liquid according to the above described [1], wherein the amine-based polymer is a polymer having a primary amine in the repeating units.
[4] The material for transfer of a substance in a liquid according to the above described [3], wherein the polymer having a primary amine in the repeating units is an amine-based polymer having a repeating unit represented by formula (I):

   -(CHR¹-CH(R²-NH₂))- (I)

   wherein R¹ represents a hydrogen atom, a hydroxyl group or an alkyl group having 1 to 5 carbon atoms, and R² represents CₙH₂ₙ, in which n represents an integer from 0 to 5.
[5] The material for transfer of a substance in a liquid according to the above described [3], wherein the polymer having the primary amine in the repeating units is an amine-based polymer having a repeating unit represented by formula (I):

   -(CHR¹-CH(R²-NH₂))- (I)

   wherein R¹ represents a hydrogen atom and R² represents CₙH₂ₙ, in which n represents an integer of 0 or 1.
[6] The material for transfer of a substance in a liquid according to any one of the above described [1] to [5], wherein the content of the amine-based polymer is 0.1 to 50% by weight based on the amount of the polymer blend.
[7] The material for transfer of a substance in a liquid according to any one of the above described [1] to [6], wherein the hydrophilic polymer contains at least one group or bond selected from the group consisting of a hydroxyl group, an ether bond or an amide bond.
[8] The material for transfer of a substance in a liquid according to any one of the above described [1] to [7], wherein the hydrophilic polymer includes at least one polymer selected from the group consisting of polyvinyl alcohol, polyvinylalkylene alcohol, polyether, polyvinylalkyl ether, polyacrylic acid, polymethacrylic acid, polyacrylamide, polyalkylene oxide, polyamide, polyamino acid, polysaccharide and polynucleotide.
[9] The material for transfer of a substance in a liquid according to the above described [8], wherein the hydrophilic polymer comprises polyvinyl alcohol.
[10] The material for transfer of a substance in a liquid according to the above described [8], wherein the hydrophilic polymer comprises cellulose.
[11] The material for transfer of a substance in a liquid according to any one of the above described [1] to [10], wherein the amine-based polymer and/or the hydrophilic polymer is a copolymer.
[12] The material for transfer of a substance in a liquid according to any one of the above described [1] to [11], wherein the hydrophilic polymer is a cross-linked polymer.
[13] The material for transfer of a substance in a liquid according to any one of the above described [1] to [12], which is in a shape of a granule, fiber, film, gel or sheet.
[14] The material for transfer of a substance in a liquid according to the above described [13], which is in a shape of a fiber having a tensile modulus from 50 MPa to 150 GPa.
[15] The material for transfer of a substance in a liquid according to the above described [14], wherein the fiber has a BET specific surface area from 0.001 to 800 m²/g and a thickness from 0.1 µm to 5 mm.
[16] A method for manufacturing the material for transfer of a substance in a liquid according to any one of the above described [13] to [15], comprising the step of forming into a shape of a granule, fiber, film, gel or sheet followed by a heat treatment.
[17] The method according to the above described [16], wherein the heat treatment is applied in a temperature range from 130 to 160°C in an inert gas atmosphere.
[18] The material for transfer of a substance in a liquid according to any one of the above described [1] to [12], wherein a polymer blend containing an amine-based polymer and a hydrophilic polymer is coated on at least a part of a support.
[19] The material for transfer of a substance in a liquid according to the above described [18], wherein the coated polymer blend has a thickness from 0.1 µm to 5 mm.
[20] The material for transfer of a substance in a liquid according to any one of the above described [18] and [19], wherein the support is made of a material selected from the group consisting of polyolefin, polyester, nylon, cellulose and derivatives thereof, vinylon, rayon, acrylic resin, cotton, wool, hemp and silk.
[21] The material for transfer of a substance in a liquid according to any one of the above described [18] to [20], wherein the support has a shape of a fiber, woven fabric, non-woven fabric, film or sheet.
[22] A method for manufacturing the material for transfer of a substance in a liquid according to any one of the above described [18] to [21], comprising the steps of applying a heat treatment after coating the polymer blend containing an amine-based polymer and a hydrophilic polymer on at least a part of the support.
[23] The method according to the above described [22], comprising the step of applying a heat treatment in the temperature range from 130 to 160°C in an inert gas atmosphere.
[24] A method for transferring a substance in a liquid, comprising the steps of: allowing the material for transfer of a substance in a liquid according to any one of the above described [1] to [15] or [18] to [21] to contact a treating liquid containing an objective substance; subsequently separating the material for transfer of a substance in a liquid from the treating liquid after a lapse of predetermined time; and trapping the objective substance in the material for transfer of a substance in a liquid.
[25] A method for transferring a substance in a liquid, comprising the steps of: allowing objective substance to be trapped in the material for transfer of a substance in a liquid according to any one of the above described [1] to [15] or [18] to [21]; allowing the material for transfer of a substance in a liquid to contact a collected liquid; and allowing the objective substance to be released in the collected liquid.
[26] The method for transferring a substance in a liquid according to the above described [24] or [25], wherein trapping and releasing the objective substance are repeatedly performed.

### EXAM PLES

The present invention will be more specifically described with reference to following examples. Assay of each characteristics in the examples was performed according to the following methods.

While evaluation methods of trapping ability and release ability may be appropriately selected depending on the property of the objective substance, the methods employed in the present invention will be shown below.
1. Trapping ability and release ability of metals were evaluated by measuring the changes of the metal concentration of the solution after a trapping/releasing experiment using an ICP emission spectrometer (trade names: ICPS-8000 manufactured by Shimadzu Co.; ULTIMA2 manufactured by Horiba Co.).
2. Trapping ability and release ability of pigments were evaluated by measuring the pigment concentration changes of the solution after a trapping/releasing experiment using an ultraviolet-visible spectrophotometer (trade name: V-550 manufactured by JASCO Co.).

### Example 1

### (Preparation of polyvinyl alcohol/polyallylamine (PVA/PAAm) blend fiber)

A mixed solvent was prepared by mixing dimethyl-sulfoxide and water in a ratio of 6:4. A polyvinyl alcohol (PVA: manufactured by Aldrich Co., weight average molecular weight: 146,000 to 186,000, degree of saponification: 98 to 99) was added to the mixed solution, and was dissolved by heating at about 105°C to prepare a 10 wt% PVA solution. After adequately dissolving PVA, polyallylamine (PAAm, manufactured by Nittobo Co., weight average molecular weight: 15,000) was added to the solution at a concentration of 20 wt% to prepare polymer blend solutions with ratios of W_{PVA} (weight of PVA)/W_{PAAM} (weight of PAAm) of 100/6, 100/10, 100/15 and 100/20, respectively. The polymer blend solution obtained was dripped into a sufficient volume of ethanol to form a fibrous polymer blend gel, which was stored at -10°C for 12 hours or more while the gel remained immersed in ethanol. The blend gel was taken out of ethanol thereafter followed by drying, and a polymer blend fiber was prepared by heating at 150°C for 2 to 3 hours in a nitrogen atmosphere.

### Example 2

### (Trap of copper with PVA/PAAm blend fiber)

The adequately dried blend fibers (50 mg, 200 mg) prepared in Example 1 were immersed in an aqueous copper solution (25 ml). The fibers were taken out of the solution after 24 hours' immersion, and the copper concentration was measured with an ICP emission spectrometer. The concentration of copper was decreased as follows.
· Blend ratio: W_{PVA/}W_{PAAM} = 100/6, weight of fiber: 50 mg
   10 ppm → 3.4 ppm
   25 ppm → 3.6 ppm
   100 ppm → 36.1 ppm
· Blend ratio: W_{PVA/}W_{PAAm} = 100/6, weight of fiber: 200 mg
   25 ppm → 3.0 ppm
   100 ppm → 4.3 ppm
· Blend ratio: W_{PVA/}W_{PAAM} = 100/10, weight of fiber: 50 mg
   10 ppm → 1.4 ppm
   25 ppm → 3.5 ppm
   100 ppm → 8.6 ppm
· Blend ratio: W_{PVA}/W_{PAAM} = 100/10, weight of fiber: 200 mg
   25 ppm → 3.2 ppm
   100 ppm → 4.3 ppm

### Comparative Example 1

### (Trap of copper with PVA fiber)

A PVA solution was prepared by the same methods as in Example 1. PVA fibers were made from the resultant PVA solution in the same manner as in Example 1.

The adequately dried PVA fibers (50 mg, 200 mg) were immersed in 25 ml of an aqueous copper solution. The fibers were taken out of the solution after 24 hours' immersion, and the copper concentration in the aqueous solution was measured with an ICP emission spectrometer. The results were as follows.
· Fiber weight: 50 mg
   10 ppm → 8.3 ppm
   25 ppm → 24.2 ppm
   100 ppm → 96.8 ppm
· Fiber weight: 200 mg
   25 ppm → 24.0 ppm
   100 ppm → 97.4 ppm

### Example 3

### (Release of copper from PVA/PAAm blend fiber)

The adequately dried blend fibers (200 mg, blend ratio: W_{PVA/}W_{PAAm} = 100/6) prepared in Example 1 were immersed in 25 ml of 100 ppm aqueous copper solution. The fibers were taken out of the solution after 24 hours' immersion, and the copper concentration of the aqueous solution was measured with an ICP emission spectrometer. The copper concentration was reduced to 4.3 ppm.

Then, the fibers taken out of the solution were immersed in 25 ml of an aqueous hydrochloric acid solution at pH 3 to allow trapped copper to be released. The copper concentration in the aqueous hydrochloric acid solution after removing the fiber was measured with the ICP emission spectrometer. The copper concentration was 95.2 ppm.

The following results were obtained by the same experiment as described above using 200 mg of the blend fiber with a different blend ratio (W_{PVA}/W_{PAAm} = 100/10).
Trap: 100 ppm → 4.3 ppm
Release: 0 ppm → 95.5 ppm

### (Repeated trapping ability of copper with PVA/PAAm blend fiber)

The blend fibers (blend ratio: 100/6) used in Example 3 were immersed in an aqueous sodium hydroxide solution at pH 11 for 30 minutes. The fiber was adequately washed with ion-exchange water, and was dried after neutralizing the entire fiber. The fiber was immersed in 25 ml of an aqueous copper solution with a copper concentration of 100 ppm. The fibers were taken out after 24 hours' immersion, and the copper concentration in the aqueous solution was measured with an ICP emission spectrometer. The copper ion concentration was reduced to 4.5 ppm.

The removed fiber was immersed in 25 ml of an aqueous hydrochloric acid solution at pH 3 thereafter to allow trapped copper to be released. The copper concentration of the aqueous hydrochloric acid solution after recovering the fiber was measured with an ICP emission spectrometer to find that the copper concentration was 94.8 ppm.

The following result was obtained by the same experiment using the blend fibers (blend ratio: 100/10) used in Example 3.
Trap: 100 ppm → 3.9 ppm
Release: 0 ppm → 95.8 ppm

### Example 4

### (Preparation of cellulose/polyallylamine (cellulose/PAAm) blend fiber)

A mixed solvent with a ratio of N-methylmorpholine-N-oxide to water of 6:1 was prepared. A cellulose powder (manufactured by Nacalai Tesque Co.) was added to the mixed solution, and a 14 wt% cellulose solution was prepared by dissolving the powder with heating at about 90°C. After adequately dissolving the powder, an aqueous 20 wt% polyallylamine (PAAm) solution was added to the cellulose solution to prepare polymer blend solutions with W_{cellulose} (weight of cellulose)/W_{PAAm} (weight of PAAm) ratios of 100/6, 100/10, 100/15, 100/20 and 100/25, respectively. Each polymer blend solution obtained was dripped into a sufficient amount of distilled water to form fibrous polymer blends. After directly substituting the solvent in the blend in distilled water, the blend was taken out and dried to prepare polymer blend fibers.

### Example 5

### (Trap of copper with cellulose/PAAm blend fiber)

The adequately dried blend fibers (50 mg, 200 mg) prepared in Example 4 with a blend ratio of 100/10 were immersed in 25 ml each of aqueous copper solutions. The fibers were taken out after 24 hours' immersion, and the copper concentration in the aqueous solution was measured with an ICP emission spectrometer. The copper concentration was reduced as follows.
· Fiber weight: 50 mg
   100 ppm → 28.9 ppm
· Fiber weight: 200 mg
   100 ppm → 3.3 ppm

### Comparative Example 2

### (Trap of copper with cellulose fiber)

Adequately dried cellulose fibers (50 mg, 200 mg) were immersed in 25 ml of an aqueous copper solution. The fibers were taken out after 24 hours' immersion, and the copper concentration in the aqueous solution was measured with an ICP emission spectrometer. The results were as follows.
· Fiber weight: 50 mg
   100 ppm → 93.2 ppm
· Fiber weight: 200 mg
   100 ppm → 93.0 ppm

### Example 6

### (Trap of cadmium and zinc with PVA/PAAm blend fiber)

The adequately dried blend fibers (100 mg) prepared in Example 1 were immersed in 100 ppm each of a single metal-containing aqueous solutions (25 ml) (aqueous cadmium solution, pH 6.9 and aqueous zinc solution, pH 6.4). The fibers were taken out after 24 hours' immersion, and the copper concentration in the aqueous solution was measured with an ICP emission spectrometer. The results were as follows.
· Blend ratio: W_{PVA}/W_{PAAM} = 100/6
   Cadmium 100 ppm → 51.8 ppm
   Zinc 100 ppm → 35.8 ppm
· Blend ratio: W_{PVA/}W_{PAAM} = 100/10
   Cadmium 100 ppm → 41.6 ppm
   Zinc 100 ppm → 24.4 ppm

### Comparative Example 3

### (Trap of cadmium and zinc with PVA fiber)

The adequately dried blend fibers (100 mg, the same fiber as used in Comparative Example 1) were immersed in 100 ppm each of single metal-containing aqueous solutions (25 ml) (aqueous cadmium solution, pH 6.9 and aqueous zinc solution, pH 6.4). The fibers were taken out after 24 hours' immersion, and the copper concentration in the aqueous solution was measured with an ICP emission spectrometer. The results were as follows.
· Weight of fiber: 100 mg
   Cadmium 100 ppm → 98.8 ppm
   Zinc 100 ppm → 99.3 ppm

### Example 7

### (Trap of palladium, silver, platinum and gold with PVA/PAAm blend fiber)

The same procedures as in Example 6 were applied to 100 ppm each of an aqueous palladium solution (pH 13.1), aqueous silver solution (pH 6.5), aqueous platinum solution (pH 3.9) and aqueous gold solution (pH 6.7), respectively. The metal concentrations were reduced as follows.
· Blend ratio: W_{PVA} : W_{PAAm} = 100/6
   Palladium 100 ppm → 15.4 ppm
   Silver 100 ppm → 10.6 ppm
   Platinum 100 ppm → 3.9 ppm
   Gold 100 ppm → 20.3 ppm
· Blend ratio: W_{PVA} : W_{PAAm} = 100/10
   Palladium 100 ppm → 21.1 ppm
   Silver 100 ppm → 4.7 ppm
   Platinum 100 ppm → 3.6 ppm
   Gold 100 ppm → 52.8 ppm

### Comparative Example 4

### (Trap of palladium, silver, platinum and gold with PVA fiber)

The same procedures as in Comparative Example 3 were applied to 100 ppm each of an aqueous palladium solution (pH 13.1), aqueous silver solution (pH 6.5), aqueous platinum solution (pH 3.9) and aqueous gold solution (pH 6.7), respectively. The metal concentrations were reduced as follows.
Palladium 100 ppm → 77.7 ppm
Silver 100 ppm → 84.5 ppm
Platinum 100 ppm → 95.5 ppm
Gold 100 ppm → 74.5 ppm

### Example 8

### (Trap of metals from aqueous solutions containing different metals with PVA/PAAm blend fiber)

The adequately dried blend fibers (100 mg each) prepared in Example 1 were immersed in 25 ml each of aqueous solutions containing different metals (a platinum and copper-containing aqueous mixed solution (pH 2.9), a platinum and nickel-containing aqueous mixed solution (pH 3.0), a nickel and cadmium-containing aqueous mixed solution (pH 6.3), a copper, zinc and cobalt-containing aqueous mixed solution (pH 5.5) and a gold, platinum and palladium-containing aqueous mixed solution (pH 3.0)), respectively. The concentration of each metal in the mixed aqueous solution was 100 ppm. The fibers were taken out after 24 hours' immersion, and the concentration of each metal was measured with an ICP emission spectrometer. The concentration of each metal was reduced as follows.
· Mixed aqueous solution of platinum and copper
   Blend ratio: W_{PVA}/W_{PAA}, = 100/6
   Platinum 100 ppm → 7.8 ppm
   Copper 100 ppm → 98.1 ppm
· Mixed solution of platinum and nickel
   Blend ratio: W_{PVA}/W_{PAAM} = 100/6
   Platinum 100 ppm → 3.7 ppm
   Nickel 100 ppm → 99.6 ppm
· Mixed solution of nickel and cadmium
   Blend ratio: W_{PVA}/W_{PAAm} = 100/6
   Nickel 100 ppm → 58.5 ppm
   Cadmium 100 ppm → 82.1 ppm
· Mixed solution of copper, zinc and cobalt
   Blend ratio: W_{PVA}/W_{PAAM} = 100/6
   Copper 100 ppm → 4.3 ppm
   Zinc 100 ppm → 92.7 ppm
   Cobalt100 ppm → 98.2 ppm
· Mixed solution of gold, platinum and palladium
   Blend ratio: W_{PVA}/W_{PAAM} = 100/6
   Gold 100 ppm → 30.8 ppm
   Platinum 100 ppm → 62.2 ppm
   Palladium 100 ppm → 25.9 ppm

### Comparative Example 5

### (Trap of metals from aqueous solutions containing different metals with PVA fiber)

The adequately dried PVA fibers (100 mg each: the same fiber as used in Comparative Example 1) were immersed in 25 ml each of aqueous solutions containing different metals (a platinum and copper-containing aqueous mixed solution (pH 2.9), a platinum and nickel-containing aqueous mixed solution (pH 3.0), a nickel and cadmium-containing aqueous mixed solution (pH 6.3), a copper, zinc and cobalt-containing aqueous mixed solution (pH 5.5) and a gold, platinum and palladium-containing aqueous mixed solution (pH 3.0)), respectively. The concentration of each metal in the mixed aqueous solution was 100 ppm. The fibers were taken out after 24 hours' immersion, and the concentration of each metal was measured with an ICP emission spectrometer. The concentration of each metal was reduced as follows.
· Mixed solution of platinum and copper
   Platinum 100 ppm → 99.8 ppm
   Copper 100 ppm → 99.9 ppm
· Mixed solution of platinum and nickel
   Platinum 100 ppm → 100.0 ppm
   Nickel 100 ppm → 99.9 ppm
· Mixed solution of nickel and cadmium
   Nickel 100 ppm → 99.6 ppm
   Cadmium 100 ppm → 99.2 ppm
· Mixed solution of copper, zinc and cobalt
   Copper 100 ppm → 99.3 ppm
   Zinc 100 ppm → 100.0 ppm
   Cobalt100 ppm → 100.0 ppm
· Mixed solution of gold, platinum and palladium
   Gold 100 ppm → 95.7 ppm
   Platinum 100 ppm → 99.7 ppm
   Palladium 100 ppm → 99.8 ppm

### Example 9

### (Release of each metal trapped from aqueous solutions containing different metals with PVA/PAAm blend fiber)

The PVA/PAAm blend fibers, on which different metals (a nickel and cadmium-containing aqueous mixed solution, a copper, zinc and cobalt-containing aqueous mixed solution) were trapped from aqueous solutions containing different metals in Example 8, were immersed in 25 ml of respective aqueous hydrochloric acid solutions at pH 3. The fibers were taken out after 24 hours' immersion, and the metal concentration in each aqueous hydrochloric acid solution was measured with an ICP emission spectrometer. Each metal was released as follows.
· Release of nickel and cadmium
   Blend ratio: W_{PVA}/W_{PAAM} = 100/6
   Nickel 0 ppm → 41.5 ppm
   Cadmium 0 ppm → 17.8 ppm
· Release of copper, zinc and cobalt
   Blend ratio: W_{PVA/}W_{PAAM} = 100/6
   Copper 0 ppm → 95.6 ppm
   Zinc 0 ppm → 7.3 ppm
   Cobalt0 ppm → 1.8 ppm

### Example 10

### (Trap of pigment in aqueous solution with PVA/PAAm blend fiber)

The adequately dried blend fibers (200 mg) prepared in Example 1 were immersed in 20 ml of an aqueous solution of food pigment red No. 3. The fibers were taken out after 24 hours' immersion, and the concentration of the pigment in the aqueous solution was measured with an ultraviolet-visible spectrophotometer. The concentration was reduced as follows.
· Blend ratio: W_{PVA}/W_{PAAM} = 100/6
   5.0 ppm → 0.7 ppm
   1.0 ppm → 0.067 ppm

### Example 11

### (Trap of pigments in aqueous solutions with PVA/PAAm blend fiber)

The adequately dried PVA/PAAm blend fibers (100 mg each) were immersed in aqueous solutions (20 ml each) of pigment red No. 106, pigment blue No. 1 and pigment yellow No. 202, respectively. The fibers were taken out after 6 hours' immersion, and the concentration of the pigment was measured with an ultraviolet-visible spectrophotometer. The concentration was reduced as follows.
· Blend ratio: W_{PVA/}W_{PAAM} = 100/6
   Pigment red No. 106
   5.0 ppm → 0.15 ppm
· Blend ratio: W_{PVA/}W_{PAAM} = 100/6
   Pigment blue No. 1
   5.0 ppm → 0.12 ppm
· Blend ratio: W_{PVA/}W_{PAAM} = 100/6
   Pigment yellow No. 202
   5.0 ppm → 0.18 ppm

### Example 12

### (Release of pigments trapped with PVA/PAAm blend fiber)

The PVA/PAAm blend fibers trapping respective pigments prepared according to Example 11 were immersed in 20 ml each of 0.2 N aqueous sodium hydroxide solutions, respectively. The fibers were taken out after 6 hours' immersion, and the pigment concentration in each aqueous solution was measured with an ultraviolet-visible spectrophotometer. The pigment was released as follows.
· Blend ratio: W_{PVA/}W_{PAAM} = 100/6
   Pigment red No. 106
   0 ppm → 4.7 ppm
· Blend ratio: W_{PVA}/W_{PAAM} = 100/6
   Pigment blue No. 1
   0 ppm → 4.8 ppm
· Blend ratio: W_{PVA}/W_{PAAM} = 100/6
   Pigment yellow No. 202
   0 ppm → 4.8 ppm

### Comparative Example 5

### (Trap of pigments in aqueous solutions with PVA fiber)

The adequately dried PVA fibers (100 mg each) prepared in Example 1 were immersed in aqueous solutions (20 ml each) of food pigment red No. 106, food pigment blue No. 1 and food pigment yellow No. 202, respectively. The fibers were taken out after 6 hours' immersion, and the concentration of the pigment was measured with an ultraviolet-visible spectrophotometer. The concentration was reduced as follows.
Pigment red No. 106
5.0 ppm → 5.0 ppm
Pigment blue No. 1
5.0 ppm → 4.9 ppm
Pigment yellow No. 202
5.0 ppm → 4.9 ppm

### Example 13

### (Trap of golf with PVA/PAAm blend fiber)

The adequately dried blend fibers (100 mg) prepared in Example 1 were immersed in 25 ml each of gold plating liquids (manufactured by NE Chemcat Co., 100. 2 ppm), respectively. The fibers were taken out after 24 hours' immersion, and the concentration of gold was measured with an ICP emission spectrometer. The gold concentration was reduced as follows.
· Blend ratio: W_{PVA}/W_{PAAm} = 100/6
   100.2 ppm → 16.9 ppm
· Blend ratio: W_{PVA}/W_{PAAm} = 100/10
   100.2 ppm → 5.1 ppm
· Blend ratio: W_{PVA}/W_{PAAm} = 100/15
   100.2 ppm → 2.0 ppm
· Blend ratio: W_{PVA}/W_{PAAm} = 100/20
   100.2 ppm → 1.7 ppm

### Example 14

### (Release of gold from PVA/PAAm blend fiber)

The blend fibers used in Example 13 into which gold is trapped were immersed in 25 ml of aqueous sodium hydroxide solution at pH 12.5 to allow trapped gold to be released. The fibers were taken out after 24 hours' immersion, and the concentration of gold in the liquid was measured with an ICP emission spectrometer. The following results were obtained.
· Blend ratio: W_{PVA/}W_{PAAM} = 100/6
   0.0 ppm → 88.3 ppm
· Blend ratio: W_{PVA}/W_{PAAM} = 100/10
   0.0 ppm → 95.2 ppm
· Blend ratio: W_{PVA}/W_{PAAM} = 100/15
   0.0 ppm → 98.2 ppm
· Blend ratio: W_{PVA}/W_{PAAM} = 100/20
   0.0 ppm → 98.3 ppm

### Comparative Example 6

### (Trap of gold with PVA fiber)

The adequately dried PVA fibers (100 mg) were immersed in 40 ml of a gold plating liquid containing 100.2 ppm of gold. The fibers were taken out after 24 hours' immersion, and the concentration of gold in the liquid was measured with an ICP emission spectrometer. The concentration of gold in the liquid was 100.1 ppm

### Example 15

### (Trap of copper with cellulose/PAAm blend fiber)

The adequately dried blend fibers (100 mg) were immersed in 40 ml of an aqueous copper solution containing 234.0 ppm of copper. The fibers were taken out after 24 hours' immersion, and the concentration of copper in the aqueous solution was measured with an ICP emission spectrometer. The concentration of copper was reduced as follows.
· Blend ratio: W_{cellulose}/W_{PAAm} = 100/6
   234.0 ppm → 154.6 ppm
· Blend ratio: W_{cellulose/}W_{PAAm} = 100/10
   234.0 ppm → 118.0 ppm
· Blend ratio: W_{cellulose}/W_{PAAm} = 100/15
   234.0 ppm → 102.6 ppm
· Blend ratio: W_{cellulose}/W_{PAAm} = 100/20
   234.0 ppm → 97.2 ppm
· Blend ratio: W_{cellulose}/W_{PAAm} = 100/25
   234.0 ppm → 48.6 ppm

### Example 16

### (Trap of gold with cellulose/PAAm blend fiber)

The adequately dried blend fibers (100 mg) were immersed in 40 ml of a gold plating liquid containing 181.6 ppm of gold. The fibers were taken out after 24 hours' immersion, and the concentration of copper in the aqueous solution was measured with an ICP emission spectrometer. The concentration of copper was reduced as follows.
Blend ratio: W_{cellulose}/W_{PAAm} = 100/6
   181.6 ppm → 120.8 ppm
· Blend ratio: W_{cellulose/}W_{PAAm} = 100/10
   181.6 ppm → 95.1 ppm
Blend ratio: W_{cellulose/}W_{PAAm} = 100/15
   181.6 ppm → 67.3 ppm
Blend ratio: W_{cellulose/}W_{PAAm} = 100/20
   181.6 ppm → 56.9 ppm
Blend ratio: W_{cellulose/}W_{PAA}m = 100/25
   181.6 ppm → 48.9 ppm

### Comparative Example 7

### (Trap of gold with cellulose fiber)

The adequately dried cellulose fibers (100 mg) were immersed in 40 ml of a gold plating liquid containing 173.4 ppm of gold. The fibers were taken out after 24 hours' immersion, and the concentration of copper in the aqueous solution was measured with an ICP emission spectrometer. The concentration of gold in the liquid was 172.8 ppm.

### Example 17

### (Coating of PVA/PAAm blend on polypropylene spun fiber)

PVA solutions with concentrations of 1 wt%, 2.5 wt% and 5 wt%, respectively, were prepared by adding the PVA powder as used in Example 1 to water followed by dissolving by heating at about 100°C. After adequately dissolving, PAAm was added to each aqueous PVA solution at a concentration of 20 wt% to prepare a polymer solution with a blend ratio W_{PVA} (weight of PVA)/W_{PAAm} (weight of PAAm) of 100/20. A polypropylene (PP) spun fibers (manufactured by Z Industries Co.) were immersed in each polymer blend solution. After impregnating the fibers with the polymer blend solution, the fibers were taken out of the solution followed by drying. A polypropylene spun fibers coated with the PVA/PAAm polymer blend were prepared by heating the fibers at 150°C for 1 hour in a nitrogen atmosphere.

The amounts of coating with respective solutions were as follows.
· 1 wt% solution (coated fiber 1)
   100 mg (PP spun fiber) → 103.4 mg (3.3 wt%)
· 2.5 wt% solution (coated fiber 2)
   100 mg (PP spun fiber) → 108.9 mg (8.2 wt%)
· 5 wt% solution (coated fiber 3)
   100 mg (PP spun fiber) → 121.6 mg (17.8 wt%)

### Example 18

### (Trap of copper with PP spun fiber coated with PVA/PPAm polymer blend)

The adequately dried coated fibers (100 mg) prepared in Example 17 were immersed in 40 ml of an aqueous copper solution with a copper concentration of 86.7 ppm. The fibers were taken out of the solution after 24 hours' immersion, and the concentration of copper in the aqueous solution was measured with an ICP emission spectrometer. The copper concentration was reduced as follows.
· Coated fiber 1
   86.7 ppm → 69.5 ppm
· Coated fiber 2
   86.7 ppm → 47.5 ppm
· Coated fiber 3
   86.7 ppm → 27.8 ppm

### Comparative Example 8

### (Trap of copper with PP spun fiber)

Adequately dried PP spun fibers (100 mg) were immersed in 40 ml of an aqueous copper solution with a copper concentration of 98.0 ppm. The fibers were taken out of the solution after 24 hours' immersion, and the concentration of copper in the aqueous solution was measured with an ICP emission spectrometer. The concentration of copper was 91.8 ppm.

### Example 19

### (Trap of gold with PP spun fiber coated with PVA/PPAm blend polymer)

The adequately dried coated fibers (100 mg) prepared in Example 17 were immersed in 45 ml of a gold plating solution with a gold concentration of 135.5 ppm. The fibers were taken out after 24 hours' immersion, and the concentration of gold in the liquid was measured with an ICP emission spectrometer. The gold concentration was reduced as follows.
· Coated fiber 1
   135.5 ppm → 86.2 ppm
· Coated fiber 2
   135.5 ppm → 71.0 ppm
· Coated fiber 3
   135.5 ppm → 53.7 ppm

### Comparative Example 7

### (Trap of gold with PP spun fiber)

Adequately dried PP spun fibers (100 mg) were immersed in 40 ml of a gold plating liquid with a gold concentration of 135.5 ppm. The fibers were taken out after 24 hours' immersion, and the concentration of gold in the liquid was measured with an ICP emission spectrometer. The gold concentration was 130.8 ppm.

### Example 20

### (Coating of PVA/PPAm polymer blend on cotton fiber)

The PVA powder as used in Example 1 was added to water followed by dissolving the powder by heating at about 100°C to prepare a PVA solution with a concentration of 5 wt%. After adequately dissolving the powder, 20 wt% of PAAm was added to the aqueous PVA solution to prepare a polymer blend solution with a blend ratio W_{PVA} (weight of PVA)/W_{PAAm} (weight of Paam) of 100/20. Copper fibers (manufactured by Suzuran Co.) were immersed in the polymer blend solution. The fibers were taken out from the solution after allowing it to be impregnated with the polymer blend solution followed by drying. The dried fibers were heated at 150°C for 1 hour in nitrogen atmosphere to prepare cotton fibers coated with the PVA/PAAm blend polymer.

### Example 21

### (Trap of copper with cotton fiber coated with PVA/PAAm blend polymer)

The adequately dried coated fibers (100 mg) prepared in Example 20 were immersed in 40 ml of an aqueous copper solution liquid with a copper concentration of 124.8 ppm. The fibers were taken out after 24 hours' immersion, and the concentration of copper in the aqueous solution was measured with an ICP emission spectrometer. The copper concentration was reduced to 81.6 ppm.

### Comparative Example 10

### (Trap of copper with cotton fiber)

Adequately dried cotton fibers (100 mg) were immersed in 40 ml of an aqueous copper solution liquid with a copper concentration of 135.5 ppm. The fibers were taken out after 24 hours' immersion, and the concentration of copper in the aqueous solution was measured with an ICP emission spectrometer. The copper concentration was reduced to 134.8 ppm.

## Claims

1. A material for transfer of a substance in a liquid, comprising a polymer blend containing an amine-based polymer and a hydrophilic polymer, wherein said amine-based polymer is a polymer having at least one selected from the group consisting of primary to tertiary amines in repeating units.

2. The material for transfer of a substance in a liquid according to Claim 1, wherein the amine-based polymer is a polymer having at least one selected from the group comprising primary to secondary amines in the repeating units.

3. The material for transfer of a substance in a liquid according to Claim 1, wherein the amine-based polymer is a polymer having a primary amine in the repeating units.

4. The material for transfer of a substance in a liquid according to Claim 3, wherein the polymer having a primary amine in the repeating units is an amine-based polymer having a repeating unit represented by formula (I):
-(CHR¹-CH(R²-NH₂))- (I)
wherein R¹ represents a hydrogen atom, a hydroxyl group or an alkyl group having 1 to 5 carbon atoms, and R² represents CₙH₂ₙ, in which n represents an integer from 0 to 5.

5. The material for transfer of a substance in a liquid according to Claim 3, wherein the polymer having the primary amine in the repeating units is an amine-based polymer having a repeating unit represented by formula (I):
-(CHR¹-CH(R²-NH₂))- (I)
wherein R¹ represents a hydrogen atom and R² represents CₙH₂ₙ, in which n represents an integer of 0 or 1.

6. The material for transfer of a substance in a liquid according to any one of Claims 1 to 5, wherein the content of the amine-based polymer is 0.1 to 50% by weight based on the amount of the polymer blend.

7. The material for transfer of a substance in a liquid according to any one of Claims 1 to 6, wherein the hydrophilic polymer contains at least one group or bond selected from the group consisting of a hydroxyl group, an ether bond or an amide bond.

8. The material for transfer of a substance in a liquid according to any one of Claims 1 to 7, wherein the hydrophilic polymer includes at least one polymer selected from the group consisting of polyvinyl alcohol, polyvinylalkylene alcohol, polyether, polyvinylalkyl ether, polyacrylic acid, polymethacrylic acid, polyacrylamide, polyalkylene oxide, polyamide, polyamino acid, polysaccharide and polynucleotide.

9. The material for transfer of a substance in a liquid according to Claim 8, wherein the hydrophilic polymer comprises polyvinyl alcohol.

10. The material for transfer of a substance in a liquid according to Claim 8, wherein the hydrophilic polymer comprises cellulose.

11. The material for transfer of a substance in a liquid according to any one of Claims 1 to 10, wherein the amine-based polymer and/or the hydrophilic polymer is a copolymer.

12. The material for transfer of a substance in a liquid according to any one of Claims 1 to 11, wherein the hydrophilic polymer is a cross-linked polymer.

13. The material for transfer of a substance in a liquid according to any one of Claims 1 to 12, which is in a shape of a granule, fiber, film, gel or sheet.

14. The material for transfer of a substance in a liquid according to Claim 13, which is in a shape of a fiber having a tensile modulus from 50 MPa to 150 GPa.

15. The material for transfer of a substance in a liquid according to Claim 14, wherein the fiber has a BET specific surface area from 0.001 to 800 m²/g and a thickness from 0.1 µm to 5 mm.

16. A method for manufacturing the material for transfer of a substance in a liquid according to any one of Claims 13 to 15, comprising the step of forming into a shape of a granule, fiber, film, gel or sheet followed by a heat treatment.

17. The method according to Claim 16, wherein the heat treatment is applied in a temperature range from 130 to 160°C in an inert gas atmosphere.

18. The material for transfer of a substance in a liquid according to any one of Claims 1 to 12, wherein a polymer blend containing an amine-based polymer and a hydrophilic polymer is coated on at least a part of a support.

19. The material for transfer of a substance in a liquid according to Claim 18, wherein the coated polymer blend has a thickness from 0.1 µm to 5 mm.

20. The material for transfer of a substance in a liquid according to any one of Claims 18 and 19, wherein the support is made of a material selected from the group consisting of polyolefin, polyester, nylon, cellulose and derivatives thereof, vinylon, rayon, acrylic resin, cotton, wool, hemp and silk.

21. The material for transfer of a substance in a liquid according to any one of Claims 18 to 20, wherein the support has a shape of a fiber, woven fabric, non-woven fabric, film or sheet.

22. A method for manufacturing the material for transfer of a substance in a liquid according to any one of Claims 18 to 21, comprising the steps of applying a heat treatment after coating the polymer blend containing an amine-based polymer and a hydrophilic polymer on at least a part of the support.

23. The method according to Claim 22, comprising the step of applying a heat treatment in the temperature range from 130 to 160°C in an inert gas atmosphere.

24. A method for transferring a substance in a liquid, comprising the steps of: allowing the material for transfer of a substance in a liquid according to any one of Claims 1 to 15 or Claims 18 to 21 to contact a treating liquid containing an objective substance; subsequently separating the material for transfer of a substance in a liquid from the treating liquid after a lapse of predetermined time; and trapping the objective substance in the material for transfer of a substance in a liquid.

25. A method for transferring a substance in a liquid, comprising the steps of: allowing objective substance to be trapped in the material for transfer of a substance in a liquid according to any one of Claims 1 to 15 or Claims 18 to 21; allowing the material for transfer of a substance in a liquid to contact a collected liquid; and allowing the objective substance to be released in the collected liquid.

26. The method for transferring a substance in a liquid according to Claim 24 or 25, wherein trapping and releasing the objective substance are repeatedly performed.
